# EUROPÄISCHE PATENTSCHRIFT

(11) **EP 1 217 222 B1**
(45) Veröffentlichungstag und Bekanntmachung des Hinweises auf die Patenterteilung: **13.06.2007**
(21) Anmeldenummer: 00127899.3
(22) Anmeldetag: 20.12.2000
(51) Int. Cl.: F16B 5/02

(54) **Toleranzausgleichselement**
Tolerance deviation compensation element
Elément de compensation de déviations de tolérance

(43) Veröffentlichungstag der Anmeldung: 26.06.2002
(73) Patentinhaber: Acument GmbH & Co. OHG, 56567 Neuwied (DE)
(72) Erfinder: Gräff, Eberhard, 74575 Bartenstein (DE)
(74) Vertreter: Beck, Alexander

(56) Entgegenhaltungen:
- EP-A- 1 180 605
- US-A- 4 043 239
- US-A- 5 288 191
- US-A- 5 492 388

## Beschreibung

Die Erfindung betrifft ein Toleranzausgleichselement zum Toleranzausgleich zweier zu verschraubender Einzelkomponenten, bestehend aus einer inneren und einer äußeren Gewindehülse, die ineinanderschraubbar sind.

Der Toleranzausgleich bei der Verschraubung von zwei Einzelkomponenten mit einer Schraube wird üblicherweise durch Einfügung von Unterlegscheiben oder die Einfügung einer Buchse erreicht. Zur individuellen Möglichkeit des Spielausgleichs werden auch zwei ineinanderschraubbare Gewindehülsen eingesetzt, die auf die erforderliche Länge auseinandergeschraubt werden. Diese Toleranzausgleichsmechanismen haben in der Praxis jedoch ganz erhebliche Nachteile. Das Einfügen von Unterlegscheiben ist von der Handhabung her schwierig. Der Toleranzausgleich ist nicht stufenlos möglich, so dass meist ein gewisses Spiel zwischen den zu verschraubenden Komponenten verbleibt. Der Toleranzausgleich durch Einstellung zweier ineinanderschraubbarer Buchsen ist mangels Handhabbarkeit der Verschraubung erst möglich, wenn das Toleranzausgleichselement eine gewisse Mindestlänge aufweist, um beide Buchsen auch unter schwierigen Einsatzbedingungen erfassen zu können.

In dem nächstgelegenen Stand der Technik, der US 4 043 239A, wird ein Toleranzausgleichselement zum Toleranzausgleich zweier zu verschraubender Einzelkomponenten vorgeschlagen, das aus einer inneren und einer äußeren Gewindehülse besteht, die ineinanderschraubbar sind, wobei in der inneren Gewindehülse ein Reibwiderstand angeordnet ist.

Ein solches Toleranzausgleichselement besteht aus zwei ineinanderschraubbaren Gewindehülsen. Durch das Herausschrauben der inneren Gewindehülse lässt sich die Gesamtlänge des Toleranzausgleichselements in axialer Richtung verändern. Der Innendurchmesser der inneren Gewindehülse ist so gewählt, dass eine Schraube durch die Hülse hindurchgeführt werden kann. In der inneren Gewindehülse ist ein Reibwiderstand angeordnet, der beim Einsetzen einer Schraube mit dieser in Kontakt gerät. Durch die Drehung der Schraube bei der Verschraubung der Komponenten wird die innere Gewindebuchse durch den Reibwiderstand mitgenommen und so weit aus der äußeren Gewindebuchse herausgedreht, bis der Toleranzausgleich erzielt ist.

Ein solches Toleranzausgleichselement gemäß dem Stand der Technik konnte jedoch nicht fixiert werden. Aufgabe der vorliegenden Erfindung ist es daher, ein solches Toleranzausgleichselement gemäß dem Stand der Technik dergestalt weiterzubilden, dass eine Fixierung der Einzelkomponenten durch Verschraubung ermöglicht wird.

Erfindungsgemäß wird diese Aufgabe dadurch gelöst, dass eine weitere Buchse vorgesehen ist, die über die äußere Gewindehülse schiebbar ist. Die Montage des erfindungsgemäßen Toleranzausgleichselements geschieht dann wie folgt: In der Ausgangsposition sind die beiden Gewindehülsen vollständig ineinander verschraubt. Die Buchse ist von den Gewindehülsen getrennt. Die erste zu verschraubende Komponente verfügt über ein Verschraubungsloch, das im Durchmesser dem Außendurchmesser der äußeren Gewindehülse entspricht. Die zweite Komponente verfügt über ein Verschraubungsloch, das dem Innendurchmesser der inneren Gewindehülse, also dem Außendurchmesser der Schraube entspricht.

Das Toleranzausgleichselement wird dann so durch das Verschraubungsloch der ersten Komponente geführt, dass diese Komponente mit der oberen Fläche des Flansches der äußeren Gewindehülse in Anlage gerät. Die Gewindehülse verläuft dabei durch das Schraubloch. Über die Gewindehülse wird dann die Buchse gesetzt. Danach wird die Schraube durch das Toleranzausgleichselement geführt. Die Schraube gerät in Reibschluss mit dem Reibwiderstand. Die Schraube wird dann eingeschraubt. Dabei nimmt sie die innere Gewindehülse so weit mit, bis die untere Fläche des Flansches in Anlage mit der zweiten zu verschraubenden Komponente gerät. Der axiale Toleranzausgleich ist damit gegeben. Die Schraube wird vollständig durch das Toleranzausgleichselement geführt und mit einer Mutter gesichert.

Vorzugsweise verfügt mindestens eine der Gewindehülsen über einen Flansch an einem Ende, so dass die Anlagefläche mit der zu verschraubenden Komponente vergrößert wird.

In einer bevorzugten Ausführungsform verfügen beide Gewindehülsen über entsprechende Flansche, die beide auf der gleichen Seite der Gewindehülsen angeordnet sein können. Die äußere Gewindehülse gelangt dann mit der oberen Fläche des Flansches in Anlage mit der zu verschraubenden Komponente, während die innere Gewindehülse mit der unteren Fläche ihres Flansches in Anlage mit der zweiten Komponente gelangt.

Vorzugsweise ist zwischen der Buchse und der äußeren Gewindehülse eine Sperrverzahnung vorgesehen, die nach Aufsetzen der Buchse eine vorläufige Sicherung der ersten Komponente zwischen Buchse und Flansch der Gewindehülse bewirkt.

Die Buchse kann auch mit der Gewindehülse verschraubt und somit gegenüber der Gewindehülse verstellbar sein.

Durch entsprechende Abmessungen der Flansche und der Wandstärke der Buchse und entsprechende Größe der Verschraubungslöcher kann darüber hinaus ein radial umlaufender Toleranzausgleich geschaffen werden.

Die Erfindung wird im folgenden anhand der beigefügten Abbildung näher erläutert:
**Figur 1** zeigt ein erfindungsgemäßes Toleranzausgleichselement im Schnitt;
**Figur 2** zeigt ein Toleranzausgleichselement gemäß Fig. 1 in verschraubtem Zustand

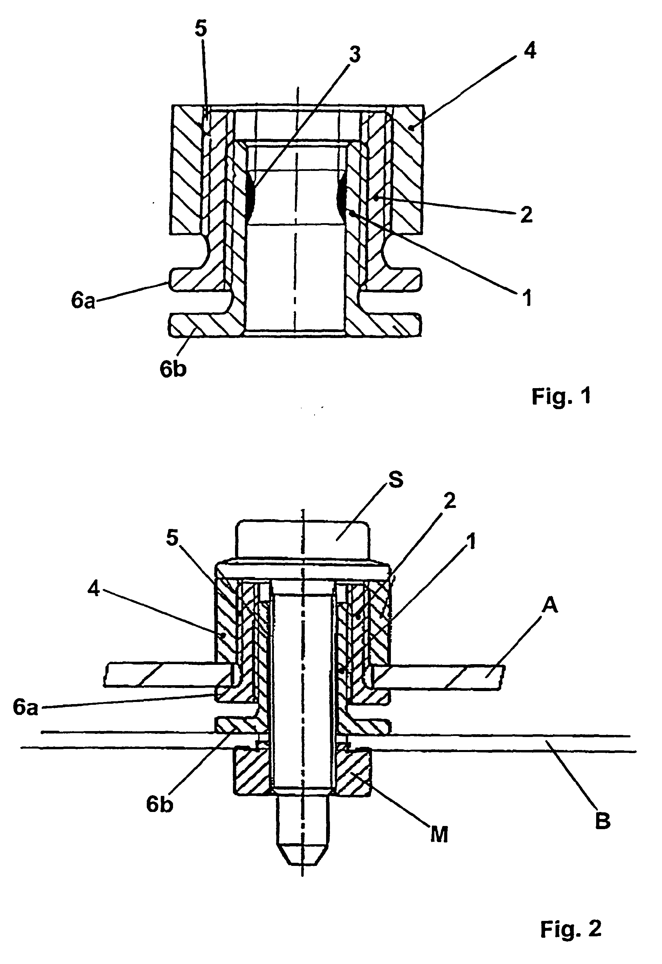

In Figur 1 ist zu erkennen, dass das Toleranzausgleichselement aus einer inneren Gewindebuchse 1 und einer äußeren Gewindebuchse 2 besteht, die ineinanderschraubbar sind. In der inneren Gewindebuchse 2 ist ein Reibwiderstand 3 angeordnet. Über die äußere Gewindehülse 2 ist eine Buchse 4 schiebbar, die mit einer Sperrverzahnung 5 versehen ist. Beide Gewindehülsen 1, 2 verfügen über Flansche 6a**,** 6b**,** die die Anlagefläche mit den zu verschraubenden Komponenten A, B liefern.

In **Fig. 2** ist ein entsprechendes Toleranzausgleichselement dargestellt, mit dem die beiden Einzelkomponenten **A** und **B** unter Ausgleich ihrer Toleranz miteinander verschraubt sind.

Die Verschraubung geschieht so, daß zunächst allein die beiden Gewindehülsen **1, 2,** die vollständig miteinander verschraubt sind, durch eine in der ersten Komponente **A** vorgesehene Bohrung geführt werden. Die Bohrung hat dabei einen geringfügig größeren Durchmesser als der Außendurchmesser der äußeren Gewindehülse **2.**

Danach wird die Buchse **4** über die äußere Gewindehülse **2** geführt. In der Praxis wird das Verstellelement mit Komponente **A** vormontiert angeliefert. Buchse **4** und äußere Gewindehülse **2** werden dabei soweit vorgespannt, daß noch ein radialer Toleranzausgleich stattfinden kann. Der Radialausgleich ist dabei abhängig von der Differenz zwischen der Bohrung in Komponente **A** und dem Durchmesser der äußeren Gewindehülse **2**.

Die erste Komponente **A** wird zusammen mit dem vormontierten Toleranzausgleichselements in die gewünschte Position bezüglich der zweiten Komponente **B** gebracht. Sodann wird die Schraube **S** in die innere Gewindehülse **1** eingeführt, wobei es zu einem Reibschluß mit dem Reibwiderstand **3** kommt, der in der inneren Gewindehülse **1** angeordnet ist. Die Schraube **S** wird sodann eingeschraubt, wobei die innere Gewindehülse **1** aufgrund des Reibschlusses mitgenommen wird und sich aus der äußeren Gewindehülse **2** herausschraubt. Dieser Vorgang wird beendet, sobald der Flansch **6b** der ersten Gewindehülse **1** mit der zweiten Komponente **B** in Anlage gelangt.

Im letzten Stadium der Verschraubung kommt dann die Verzahnung **5** an der Buchse **4** zur Wirkung. Die Schraube **S** verspannt über die Verzahnung **5** die Buchse **4** mit der äußeren Gewindehülse **2.** Somit sind Buchse **4** und äußere Gewindehülse **5** mit Teil **A** kraftschlüssig verbunden und die Verbindung kann auf Achse in beide Richtungen belastet werden.

## Patentansprüche

1. Toleranzausgleichselement zum Toleranzausgleich zweier zu verschraubender Einzelkomponenten bestehend aus einer inneren und einer äußeren Gewindehülse (1,2), die ineinanderschraubar sind, wobei in der inneren Gewindehülse (1) ein Reibwiderstand (3) angeordnet ist, **dadurch gekennzeichnet, dass** das Toleranzausgleichselement über eine über die äußere Gewindehülse (2) schiebbare Buchse (4) verfügt, wobei zwischen Buchse (4) und äußerer Gewindehülse (2) eine Sperrverzahnung (5) angeordnet ist.

2. Toleranzausgleichselement nach Anspruch 1, **dadurch gekennzeichnet, dass** wenigstens eine der beiden Gewindehülsen (1,2) an einem Ende einen Anlageflansch aufweist.

3. Toleranzausgleichselement nach Anspruch 1 oder 2, **dadurch gekennzeichnet, dass** der Reibwiderstand einvulkanisiert ist.

4. Toleranzausgleichselement nach Anspruch 1, **dadurch gekennzeichnet, dass** die Buchse (4) über ein Gewinde gegenüber der äußeren Gewindehülse (2) verstellbar ist.

5. Toleranzausgleichselement nach einem der Ansprüche 1 bis 4, **dadurch gekennzeichnet, dass** der Außendurchmesser der Buchse (4) im wesentlichen dem Durchmesser des/der Flansche/s der Gewindebuchse/n entspricht.

## Claims

1. Tolerance compensation component for compensating the tolerance between two singular members to be screwed together consisting of an inner and an outer threaded sleeve (1, 2) which can be screwed into one another, wherein in the inner threaded sleeve (1) a frictional resistance (3) is positioned, **characterised in that** the tolerance compensation component is having a bushing (4) which can be slipped over the outer threaded sleeve (2), wherein interlocking teeth (5) are provided between the bushing (4) and the outer threaded sleeve (2).

2. Tolerance compensation component according to claim 1, **characterised in that** at least one of the two threaded sleeves (1, 2) is having an abutment flange at one end.

3. Tolerance compensation component according to claim 1 or 2, **characterised in that** the frictional resistance is vulcanised.

4. Tolerance compensation component according to claim 1, **characterised in that** the bushing (4) by means of a thread is adjustable with respect to the outer threaded sleeve (2).

5. Tolerance compensation component according to any of the claims 1 to 4, **characterised in that** the exterior diameter of the bushing (4) generally is corresponding to the diameter of the flange(s) of the threaded sleeve(s).

## Revendications

1. Élément de compensation de tolérances pour la compensation de tolérances de deux composants individuels qu'il s'agit de visser, comprenant une douille à pas de vis intérieure et une douille à pas de vis extérieure (1, 2), susceptibles d'être vissées l'une dans l'autre, une résistance à friction (3) étant agencée dans la douille à pas de vis intérieure (1),
**caractérisé en ce que** l'élément de compensation de tolérances comprend un manchon (4) susceptible d'être enfilé sur la douille à pas de vis extérieure (2), une denture de blocage (5) étant agencée entre le manchon (4) et la douille à pas de vis extérieure (2).

2. Élément de compensation de tolérances selon la revendication 1, **caractérisé en ce que** l'une au moins des deux douilles à pas de vis (1, 2) comprend une bride d'appui à une extrémité.

3. Élément de compensation de tolérances selon la revendication 1 ou 2, **caractérisé en ce que** la résistance à friction est intégrée par vulcanisation.

4. Élément de compensation de tolérances selon la revendication 1, **caractérisé en ce que** le manchon (4) peut être réglé par rapport à la douille à pas de vis extérieure (2) au moyen d'un pas de vis.

5. Élément de compensation de tolérances selon l'une des revendications 1 à 4, **caractérisé en ce que** le diamètre extérieur du manchon (4) correspond essentiellement au diamètre de la ou des bride(s) de la ou des douille(s) à pas de vis.
